# EUROPÄISCHE PATENTANMELDUNG

(11) **EP 1 441 156 A1**
(43) Veröffentlichungstag der Anmeldung: **28.07.2004**
(21) Anmeldenummer: 02724820.2
(22) Anmeldetag: 15.03.2002
(51) Int. Cl.: F16J 9/06

(54) **KOLBENDICHTUNG**

(30) Priorität: 27.09.2001 RU 2001126275
(71) Anmelder: Zakhvatov, German Ivanovich, Kazan, 420021 (RU)
(72) Erfinder: Zakhvatov, German Ivanovich, Kazan, 420021 (RU)
(74) Vertreter: Jeck, Anton, Dipl.-Ing.
(86) Internationale Anmeldenummer: PCT/RU2002/000093
(87) Internationale Veröffentlichungsnummer: WO 2003/027542

(57) **Zusammenfassung**

Eine Kolbendichtung enthält Dichtungsringe (3, 3') die in Nuten (1) eines Kolbens (2) angeordnet sind, und Federelemente (5, 5', 5") zum Anpressen der Ringe (3, 3') an eine Zylinderwandung (6), in der sich der Kolben (2) befindet. Jeder der Dichtungsringe (3, 3') ist eine aus mindestens zwei aneinanderliegenden Teilen (4, 4') mit einem Außenradius, der im Wesentlichen dem Innenradius des Zylinders 6 entspricht, zusammengesetzt und die Spannkraftelemente (5, 5', 5") befinden sich im Inneren des Kolbens.

## Beschreibung

Die vorliegende Erfindung gehört zu Kolbensystemen mit zylindrischen Kolben und betrifft insbesondere eine Kolbendichtung.

### Stand der Technik

Bekannt ist eine Kolbendichtung (SU, A1, 1350428, MKI: F16J 9/06, veröffentlicht am 07.11.1987 B. I. Nr. 41), die Kolbenringe in Kolbennuten enthält. Diese Kolbenringe werden gegen die Zylinderwandung mit Hilfe eines zusammengesetzten Expanders und von Federelementen gedrückt, die sich unter dem Expander befinden und mit diesem Expander fest verbunden sind. Bei Verwendung der Kolbenringe geschnittenen Typs werden die Dichtungseigenschaften durch die Federkraft des Ringmaterials gewährleistet. Dabei wird eine gewisse Anpressgleichmäßigkeit zwischen Ring und Zylinder mittels der zusätzlichen Federelemente erreicht.

Ein Nachteil dieser Kolbendichtung besteht im ungleichmäßigen Anpressen jedes Kolbenrings an die Zylinderwandung, weil sich die innere Spannung an der ganzen Oberfläche des Kolbenrings an der Schnittstelle wesentlich verändert. Die Erhöhung der Anpressgleichmäßigkeit mittels der zusätzlichen Federelemente führt zu einer Reibungserhöhung und zu einem schnellen Verschleiß des Kolben-Zylinder-Paares.

### Zusammenfassung

Die Aufgabe der vorliegenden Erfindung besteht darin, eine Kolbendichtung zu schaffen, die mittels einer konstruktiven Ausführung des Dichtungsrings eine Erhöhung der Anpressgleichmäßigkeit zwischen dem Ring und Zylinder bei minimaler Anpresskraft gewährleistet.

Die gestellte Aufgabe wird dadurch gelöst, dass jeder Dichtungsring der Kolbendichtung Federelemente für das Anpressen der Ringe an die Zylinderwandung enthält und aus mindestens zwei aneinander anstoßenden Teilen besteht. Der Außenradius dieser Teile entspricht im Wesentlichen dem Innenradius des Zylinders und die Federelemente befinden sich im Inneren des Kolbens. Dabei können die Federelemente entweder radial oder parallel zueinander und symmetrisch in Bezug auf das Kolbenzentrum positioniert werden. Jeder Dichtungsring kann entweder aus zwei Halbringen oder mindestens aus drei Segmenten bestehen; dabei gibt es für das Anpressen jedes Dichtungs-ringes mindestens zwei Federelemente, die mit Schiebern ausgerüstet werden können, die mit der Innenfläche des Dichtungsrings zusammenwirken.

### Kurzbeschreibung der Zeichnungen

Im folgenden wird die vorliegende Erfindung anhand von Ausführungsbeispielen und den beigefügten Zeichnungen näher erläutert. Es zeigen:
- Fig. 1: eine Kolbendichtung mit einem Dichtungsring, der aus zwei Halbringen und parallel angeordneten Federelementen besteht,
- Fig. 2: dasselbe, aber mit radial angeordneten Federelementen,
- Fig. 3: eine Kolbendichtung mit einem Dichtungsring, der aus drei Segmenten besteht, und
- Fig. 4: die vergrößerte Verbindung der Teile des Dichtungsrings, an der Stelle A der Fig. 1.

### Beschreibung von bevorzugten Ausführungsbeispielen

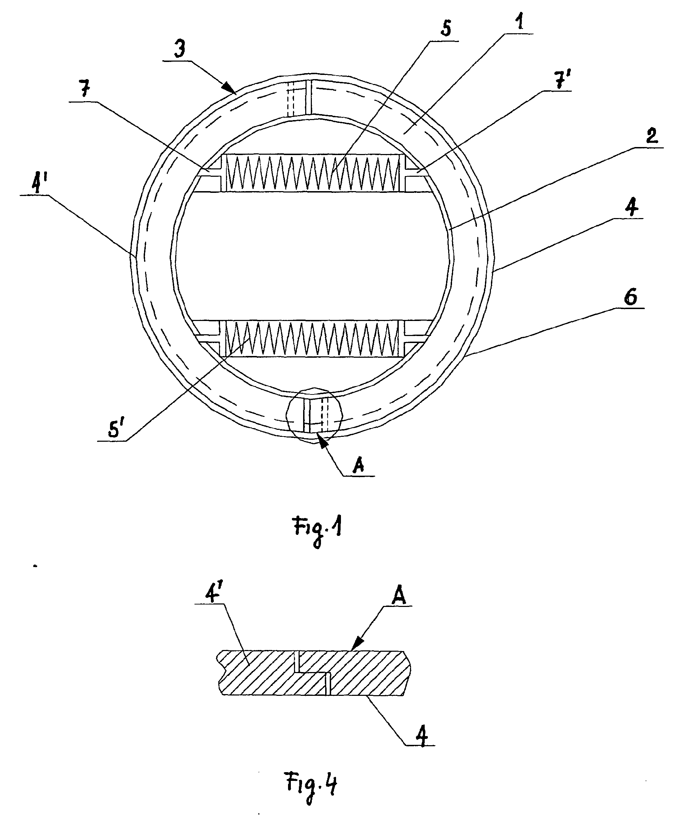

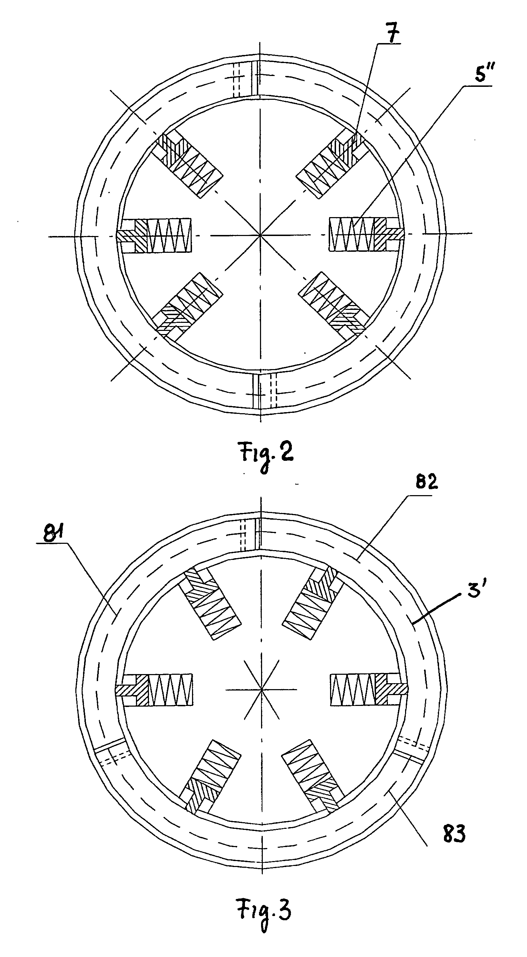

Gemäß der Erfindung enthält die Kolbendichtung in Nuten 1 (Figur 1) eines Kolbens 2, angeordnete Dichtungsringe 3, von denen jeder aus mindestens zwei aneinander anliegenden Teilen (Segmenten) 4, 4' besteht, und Federelemente 5, 5' die sich im Inneren des Kolbens 2 befinden und zum Anpressen der Ringe 3 an die Wandung eines Zylinders 6 dienen, in dem Kolben 2 gleitet. Die Fig. 1 stellt den Dichtungsring 3 dar, der aus zwei Ringteilen 4, besteht; die Federelemente 5 befinden sich im Inneren des Kolbens 2, parallel zueinander und symmetrisch in Bezug auf das Zentrum des Kolbens 2. Die Federelemente 5 sind mit Schiebern 7, 7' verbunden. Die Federelemente 5" können radial installiert werden, wie in Fig. 2 gezeigt ist.

In Fig. 3 ist ein Dichtungsring 3' dargestellt, der aus drei Segmenten 81, 82, 83 besteht. Die Anzahl der Federelemente kann abhängig von der Anzahl der Bestandteile der Dichtungsringe und von der Kolbengröße verschieden sein. Die Teile 4, 4' des Dichtungsrings 3 bzw. die Teile 81, 82, 83 des Dichtungsrings 3' schließen sich mittels einer Überlappung der Enden 4' aneinander, wie es in Fig. 4 dargestellt ist. Andere Varianten der Verbindung der Teile 4 des Ringes 3 sind möglich. Der äußere Durchmesser jedes Dichtungsrings 3 ist eigentlich dem inneren Radius des Zylinders 6 gleich.

Die Kolbendichtung arbeitet folgendermaßen:

Die Teile 4, 4' (z. B. Halbringe oder Segmente) jedes Dichtungsrings 3 bzw. 81, 82, 83 jedes Dichtungsrings 3' werden an die Fläche des Zylinders 6 mit Hilfe der Federelementen 5, 5', 5", die im Körper des Kolbens 2 installiert sind, durch die Schieber 7, 7' oder unmittelbar angepresst. Die gleichen oder ähnlichen äußeren Radien der Halbringe 4, 4' oder Segmente 81, 82, 83 der inneren Fläche des Zylinders 6 gewährleisten das Vermeiden von starken Deformationen im Dichtungsring 3, 3' und die Gleichmäßigkeit seines Anpressens an die Zylinderwandung 6 bei minimaler Anpresskraft. Damit wird ein geringer Verschleiß der Dichtungsringwanderung erreicht.

Je nach Verschleiß des Dichtungsrings und der Zylinderwanderung 6 erfolgt ein gleichmäßiges Reiben aneinander, was die Kompressionsbeständigkeit beim Langzeitbetrieb der Kolbendichtung gewährleistet.

### Wirtschaftliche Anwendung

Die vorliegende Erfindung kann bei Verbrennungsmotoren, Pumpen und Kompressoren verwendet werden.

## Patentansprüche

1. Kolbendichtung mit Kolbenringen (3, 3'), die in Nuten (1) eines Kolben (2) angeordnet sind, und mit Federelementen (5) zum Anpressen der Ringe (3, 3') an eine Zylinderwandung (6), in der sich der Kolben (2) befindet,
**dadurch gekennzeichnet,**
**dass** jeder Dichtungsring (3, 3') mindestens aus zwei aneinanderliegenden Teilen (4, 4') besteht, wobei diese Dichtungsringe einen äußeren Radius aufweisen, der im Wesentlichen dem inneren Radius des Zylinders (6) gleich ist, und dass die Federelemente (5, 5', 5") sich im Inneren des Kolbens (2) befinden.

2. Kolbendichtung nach Anspruch 1,
**dadurch gekennzeichnet,**
**dass** die Federelemente (5, 5') parallel zueinander und symmetrisch in Bezug auf das Kolbenzentrum (2) platziert sind.

3. Kolbendichtung nach Anspruch 1,
**dadurch gekennzeichnet,**
**dass** die Federelemente (5") radial angeordnet sind.

4. Kolbendichtung nach einem der Ansprüche 1 bis 3,
**dadurch gekennzeichnet,**
**dass** jeder Dichtungsring (3) aus zwei Halbringen (4, 4') gebildet ist.

5. Kolbendichtung nach einem der Ansprüche 1 bis 3,
**dadurch gekennzeichnet,**
**dass** jeder Dichtungsring (3') aus mindestens drei Segmenten (81, 82, 83) gebildet ist.

6. Kolbendichtung nach einem der Ansprüche 1 bis 5,
**dadurch gekennzeichnet,**
**dass** jedes Federelement 5 als Feder ausgeführt ist.

7. Kolbendichtung nach einem der Ansprüche 1 bis 5,
**dadurch gekennzeichnet,**
**dass** jedes Spannkraftelement (5, 5', 5") mit einem Schieber (7, 7') ausgerüstet ist, der mit der Innenfläche des Dichtungsrings (3, 3') zusammenwirkt.
